# EUROPÄISCHE PATENTANMELDUNG

(11) **EP 3 165 073 A1**
(43) Veröffentlichungstag der Anmeldung: **10.05.2017**
(21) Anmeldenummer: 16401080.3
(22) Anmeldetag: 02.11.2016
(51) Int. Cl.: A01C 23/00, A01M 7/00

(54) **REGEL- ODER STEUERSYSTEM, LANDWIRTSCHAFTLICHE MASCHINE**

(30) Priorität: 06.11.2015 DE 102015119073
(71) Anmelder: Amazonen-Werke H. Dreyer GmbH & Co. KG, 49205 Hasbergen (DE)
(72) Erfinder: Heer, Jochen, 49074 Osnabrück (DE); Kühn, Christoph, 49080 Osnabrück (DE); Mindrup, Tobias, 49080 Osnabrück (DE)

(57) **Zusammenfassung**

Regel- oder Steuersystem für eine landwirtschaftliche Maschine (2) mit einem Verteilergestänge (3) zum Ausbringen von Material, wie Düngemittel, Pflanzenschutzmittel oder Saatgut, mit einer Sensoreinrichtung zur Ermittlung des Bodenund/oder Pflanzenabstands vom Verteilergestänge und einer Datenverarbeitungseinheit zur Verarbeitung der Sensorsignale. Um eine landwirtschaftliche Maschine mit einem solchen System, ein Verfahren zum Betreiben einer landwirtschaftlichen Maschine sowie die Verwendung einer Sensoreinrichtung anzugeben, ist vorgesehen dass die Sensoreinrichtung wenigstens ein Kamerasystem (4) umfasst, das für die Abstandsmessung angepasst ist, wobei die Signale des Kamerasystems durch die Datenverarbeitungseinrichtung zur Höhen- und/oder Neigungsverstellung des Verteilergestänges (3) verwendet werden, um den Boden- und/oder Pflanzenabstand des Verteilergestänges (3) einzustellen.

## Beschreibung

Die Erfindung bezieht sich auf ein Regel- oder Steuersystem für eine landwirtschaftliche Maschine mit den Merkmalen des Oberbegriffs des Anspruchs 1. Die Erfindung bezieht sich ferner auf eine landwirtschaftliche Maschine mit einem solchen System, ein Verfahren zum Betreiben einer landwirtschaftlichen Maschine und die Verwendung einer Sensoreinrichtung für eine landwirtschaftliche Maschine.

Ein Regel- oder Steuersystem der eingangs genannten Art ist beispielsweise aus EP 1 444 894 A1 bekannt.

Bei landwirtschaftlichen Maschinen mit einem Verteilergestänge zum Ausbringen von Material, wie Düngemittel, Pflanzenschutzmittel oder Saatgut, die bspw. als Feldspritzen ausgebildet sind, besteht die Anforderung, dass das Verteilergestänge möglichst parallel zum Boden oder zum Pflanzenbestand geführt wird, um eine gleichmäßige Ausbringung des Materials zu erreichen. Dafür ist üblicherweise ein Regel- oder Steuersystem vorgesehen, das Sensoreinrichtungen zur Ermittlung des Boden- und/oder Pflanzenabstands vom Verteilergestänge aufweist. Die Sensorsignale werden an eine Datenverarbeitungseinheit übermittelt, die dann die Abstandsregelung des Verteilergestänges vornimmt. Bei den Sensoreinrichtungen handelt es sich, wie beispielsweise aus EP 1 444 894 A1 bekannt, um mehrere Ultraschallsensoren, die entlang des Verteilergestänges angeordnet sind, um eine möglichst große Breite des Verteilergestänges für die Abstandsmessung zu erfassen.

Der einzelne Ultraschallsensor misst punktuell den Abstand zwischen dem Verteilergestänge und dem Boden bzw. der Bestandsoberfläche. Die Signale der verschiedenen Ultraschallsensoren sind entsprechend zu korrelieren, was die Steuerung bzw. Regelung aufwändig macht.

Der Erfindung liegt die Aufgabe zugrunde, das Regel- oder Steuersystem der eingangs genannten Art zu vereinfachen. Der Erfindung liegt ferner die Aufgabe zugrunde, eine landwirtschaftliche Maschine mit einem solchen System, ein Verfahren zum Betreiben einer landwirtschaftlichen Maschine sowie die Verwendung einer Sensoreinrichtung anzugeben.

Erfindungsgemäß wird die Aufgabe durch das Regel- oder Steuersystem nach Anspruch 1 gelöst. Mit Blick auf die landwirtschaftliche Maschine, das Verfahren und die Verwendung wird die Aufgabe jeweils durch die Gegenstände der Ansprüche 5, 6 und 7 gelöst.

Die Erfindung beruht auf dem Gedanken, ein Regel- oder Steuersystem für eine landwirtschaftliche Maschine mit einem Verteilergestänge zum Ausbringen von Material, wie Düngemittel, Pflanzenschutzmittel oder Saatgut, anzugeben, das eine Sensoreinrichtung zur Ermittlung des Boden- und/oder Pflanzenabstands vom Verteilergestänge sowie eine Datenverarbeitungseinheit zur Verarbeitung der Sensorsignale aufweist. Die Sensoreinrichtung umfasst wenigstens ein Kamerasystem, das für die Abstandsmessung angepasst ist. Die Signale des Kamerasystems werden durch die Datenverarbeitungseinrichtung zur Höhen- und/oder Neigungsverstellung des Verteilergestänges verwendet, um den Boden- und/oder Pflanzenabstand des Verteilergestänges einzustellen.

Die Erfindung hat den Vorteil, dass der Pflanzenabstand bzw. der Bodenabstand zum Verteilergestänge nicht punktuell, sondern über die Gestängebreite, d.h. linien- oder flächenförmig erfasst wird. Damit kann der Abstand zwischen dem Verteilergestänge und dem Boden- bzw. der Pflanzendecke mit weniger Sensoren, im Extremfall mit nur einem einzigen Sensor, gemessen werden, wodurch sich die Regelung bzw. Steuerung der Maschine vereinfacht.

Zwar ist die Verwendung von Kamerasystemen zur Steuerung einer landwirtschaftlichen Maschine aus EP 2 835 050 A1 bekannt. Dabei wird aber nicht der Abstand zwischen dem Boden bzw. der Pflanzendecke und dem Verteilergestänge mittels der Kamera gemessen, sondern die Kamera erfasst die Position oder Bewegungen des Gestänges, um Wankbewegungen des Gestänges relativ zum Boden oder der Pflanzenbestandskante oder relativ zu eventuellen Hindernissen zu berücksichtigen. Es handelt sich also um eine kameragestützte Objekterkennung, um Kollisionen zu vermeiden.

Vorzugsweise umfasst das Kamerasystem eine TOF-Kamera. TOF-Kameras (time of flight) sind 3D-Kameras, die nach dem Laufzeitverfahren arbeiten und Abstände zu Oberflächen messen. Derartige Kameras sind an sich bekannt und verwenden sogenannte PMD-Sensoren (photonic mixing device), also optische Sensoren, die nach dem Lichtlaufzeitverfahren funktionieren. Dazu werden die jeweiligen Messobjekte, beispielsweise die Bodenoberfläche oder die Pflanzendecke, von Lichtimpulsen angeleuchtet. Die TOF-Kamera misst für jeden Bildpunkt die Laufzeit, die das Licht bis zu dem Objekt und wieder zurück zur Kamera benötigt. Die Laufzeit ist direkt proportional zur Distanz, so dass für jeden angeleuchteten Bildpunkt die Entfernung zur Kamera bzw. zu einem entsprechenden Referenzpunkt berechnet werden kann.

Bei einer bevorzugten Ausführungsform ist ein einziges Kamerasystem, insbesondere eine einzige TOF-Kamera, zur Erfassung der Gesamtbreite des Verteilergestänges vorgesehen. Diese Ausgestaltung eignet sich für kurze Verteilergestänge. Bei großen Verteilergestängen, beispielsweise mit einer Gesamtbreite von bis zu 30 m oder mehr, ist es vorteilhaft, wenn jeweils ein Kamerasystem zur Erfassung einer halben Gesamtbreite des Verteilergestänges vorgesehen ist. Bei dieser Ausführung weist also das Regel- oder Steuersystem genau zwei Kamerasysteme, insbesondere zwei TOF-Kameras auf. Es ist möglich, mehr als zwei Kamerasysteme vorzusehen.

Die Erfindung umfasst ferner eine landwirtschaftliche Maschine zum Ausbringen von Material, wie Düngemittel, Pflanzenschutzmittel oder Saatgut, mit einem Vorratsbehälter, einem Verteilergestänge, das mit dem Vorratsbehälter verbunden oder verbindbar ist, und einem erfindungsgemäßen Regel- oder Steuersystem.

Bei dem erfindungsgemäßen Verfahren zum Betreiben einer landwirtschaftlichen Maschine wird Material, wie Düngemittel, Pflanzenschutzmittel oder Saatgut aus einem Vorratsbehälter durch ein Verteilergestänge ausgebracht. Der Boden- und/oder Pflanzenabstand vom Verteilergestänge wird mit einem Kamerasystem gemessen, das für die Abstandsmessung angepasst ist, insbesondere aufweisend eine TOF-Kamera. Die Signale des Kamerasystems werden zur Höhen- und/oder Neigungsverstellung des Verteilergestänges verwendet, um den Boden- und/oder Pflanzenabstand des Verteilergestänges einzustellen.

Im Rahmen der Erfindung wird die Verwendung einer Sensoreinrichtung zur Höhen- und/oder Neigungsverstellung des Verteilergestänges einer landwirtschaftlichen Maschine zum Ausbringen von Material, wie Düngemittel, Pflanzenschutzmittel oder Saatgut, beansprucht, wobei die Sensoreinrichtung ein Kamerasystem, das für die Abstandsmessung angepasst ist, insbesondere mit einer TOF-Kamera, umfasst, um den Boden- und/oder Pflanzenabstand des Verteilergestänges einzustellen.

Die Erfindung wird mit weiteren Einzelheiten anhand der beigefügten schematischen Figuren näher erläutert. In diesen zeigen
- Fig. 1: eine perspektivische Ansicht einer landwirtschaftlichen Maschine nach einem erfindungsgemäßen Ausführungsbeispiel, bei dem ein Kamerasystem auf dem Vorratsbehälter angebracht ist;
- Fig. 2: die landwirtschaftliche Maschine gemäß Fig. 1, bei dem das Kamerasystem auf dem Dach der Zugmaschine angeordnet ist, und
- Fig. 3: die landwirtschaftliche Maschine gemäß Fig. 1, bei dem das Kamerasystem auf dem Verteilergestänge angeordnet ist.

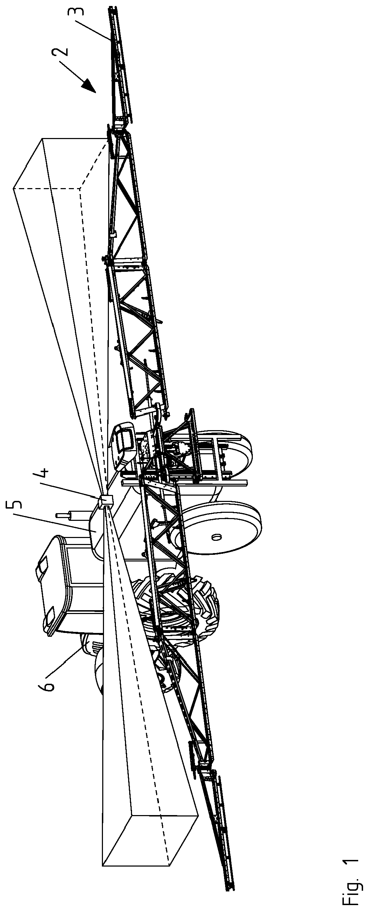

In der Fig. 1 ist eine von einer Zugmaschine 6 gezogene landwirtschaftliche Maschine 2 dargestellt, die als Feldspritze ausgebildet ist und zum Ausbringen von Pflanzenschutzmittel oder Düngemittel verwendet wird. Die Erfindung ist nicht auf gezogene landwirtschaftliche Maschinen eingeschränkt, sondern kann für selbstfahrende oder getragene landwirtschaftliche Maschinen eingesetzt werden.

Die landwirtschaftliche Maschine umfasst einen Vorratsbehälter 5 sowie ein mit dem Vorratsbehälter 5 verbundenes Verteilergestänge 3. Am Verteilergestänge 3 sind in an sich bekannter Weise Verteilerdüsen befestigt, die über Schlauchsysteme mit dem Vorratsbehälter 5 zur Ausbringung des Materials fluidverbunden sind. Derartige Maschinen sind bekannt. Um das Verteilergestänge 3 parallel zum Boden oder zum Pflanzenbestand auszurichten, weist die Maschine in ebenfalls bekannter Weise verschiedene Stellorgane, bspw. Hydraulikzylinder, auf, durch die das Verteilergestänge 3 um eine in Fahrtrichtung verlaufende Drehachse verstellt werden kann. Zusätzlich kann die Maschine Stellorgane zur Höhenführung des Verteilergestänges aufweisen, beispielsweise einen vertikal verstellbaren Hubrahmen, an dem das Verteilergestänge 3 aufgehängt ist. Die Erfindung ist nicht auf eine spezielle Mechanik zur Ausrichtung des Verteilergestänges 3 eingeschränkt.

Der Abstand des Verteilergestänges vom Boden oder der Pflanzendecke kann entweder durch eine Verstellung der Höhenlage des Verteilergestänges und/oder durch eine Verstellung der Neigung des Verteilergestänges um die zur Fahrtrichtung verlaufende Drehachse erfolgen. Durch die Neigungsverstellung wird die Parallelität des Verteilergestänges zur Pflanzendecke bzw. zum Boden und somit ein möglichst gleicher Abstand über die gesamte Gestängebreite eingestellt. Durch die Höhenverstellung wird die Distanz zwischen dem Verteilergestänge 3 und dem Boden bzw. der Pflanzendecke eingestellt.

In beiden Fällen ist die Kenntnis des Pflanzenabstands oder des Bodenabstands des Verteilergestänges erforderlich. Dazu weist das Regel- oder Steuersystem der Maschine einen Sensor auf, der den Boden- und/oder Pflanzenabstand vom Verteilergestänge ermittelt. Die Signale der Sensoreinrichtung werden an eine nicht dargestellte Datenverarbeitungseinheit weitergeleitet, die diese verarbeitet und dann entsprechend zur Ansteuerung der Stellorgane verwendet.

Bei dem Ausführungsbeispiel gemäß Fig. 1 umfasst die Sensoreinrichtung ein 3D-Kamerasystem, das für die Abstandsmessung angepasst ist. Das Kamerasystem 4 umfasst eine TOF-Kamera, beispielsweise der Firma IFM Elektronik. Andere TOF-Kameras können zur Abstandsmessung verwendet werden. Bei den TOF-Kameras bzw. der TOF-Kamera handelt es sich um eine optische Kamera mit interner Beleuchtungseinheit, die punktweise den Abstand zwischen der Kamera und dem Boden bzw. der Pflanzendecke misst.

Das Kamerasystem 4 weist zwei Kameras auf, die auf dem Vorratsbehälter 5 angeordnet sind. Es ist auch möglich, ein einziges Kamerasystem mit einer einzigen Kamera oder zwei gesonderte Kamerasysteme mit je einer Kamera zu verwenden.

Die beiden Kameras erfassen jeweils die zu bearbeitende Oberfläche vor einem der beiden Segmente des Verteilergestänges, die sich seitlich der Längsachse der landwirtschaftlichen Maschine erstrecken. Dabei wird der Abstand jeweils eines Segmentes zur Pflanzenoberfläche bestimmt, der für eine entsprechende Regelung der Höhe und/oder Neigung des Verteilergestänges verwendet wird.

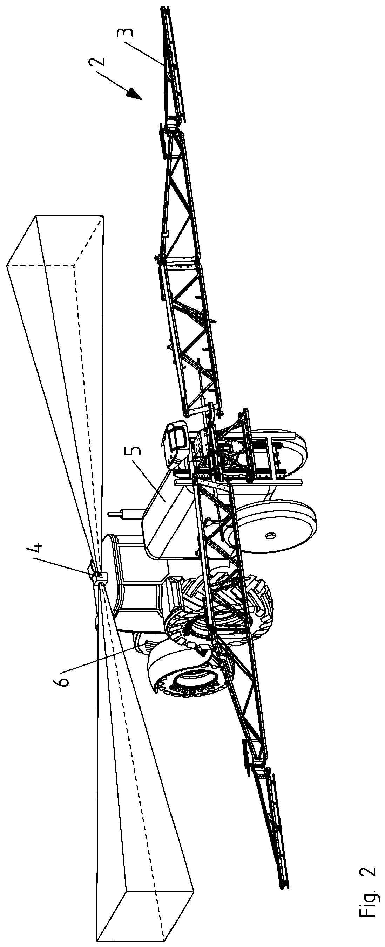

Alternativ zu der in Fig. 1 dargestellten Anordnung der beiden TOF-Kameras können diese, wie in Fig. 2 dargestellt, auf dem Dach bzw. allgemein auf der Zugmaschine 6 angeordnet sein. Auch in diesem Fall wird die Umgebung vor dem Verteilergestänge 3 erfasst, um so den Abstand zwischen dem Boden bzw. der Pflanzendecke und dem Verteilergestänge 3 zu bestimmen.

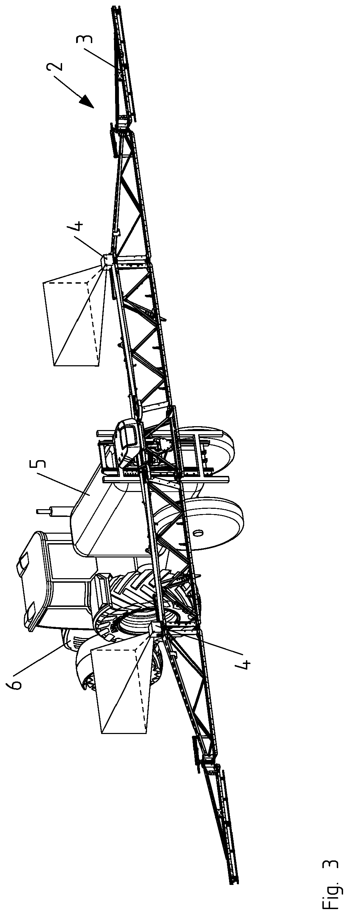

Bei dem Ausführungsbeispiel gemäß Fig. 3 sind die beiden Kameras des Kamerasystems 4 direkt am Verteilergestänge 3 angebracht und erfassen den Abstand zwischen Boden- bzw. Pflanzendecke und dem jeweiligen Gestängesegment, auf dem die Kamera angeordnet ist.

Bei allen drei Ausführungsbeispielen wird die vom Verteilergestänge 3 zu überfahrende Fläche durch die Kameras erfasst. Dadurch ist eine vorausschauende Regelung bzw. Steuerung des Verteilergestänges 3 möglich, so dass frühzeitig die entsprechenden Stellorgane angesteuert werden können, um die gewünschte Position des Verteilergestänges 3 mit möglichst geringer Beschleunigung anzufahren.

## Patentansprüche

1. Regel- oder Steuersystem für eine landwirtschaftliche Maschine (2) mit einem Verteilergestänge (3) zum Ausbringen von Material, wie Düngemittel, Pflanzenschutzmittel oder Saatgut, mit einer Sensoreinrichtung zur Ermittlung des Boden- und/oder Pflanzenabstands vom Verteilergestänge und einer Datenverarbeitungseinheit zur Verarbeitung der Sensorsignale, **dadurch gekennzeichnet, dass** die Sensoreinrichtung wenigstens ein Kamerasystem (4) umfasst, das für die Abstandsmessung angepasst ist, wobei die Signale des Kamerasystems durch die Datenverarbeitungseinrichtung zur Höhen- und/oder Neigungsverstellung des Verteilergestänges (3) verwendet werden, um den Boden- und/oder Pflanzenabstand des Verteilergestänges (3) einzustellen.

2. System nach Anspruch 1, **dadurch gekennzeichnet, dass** das Kamerasystem (4) eine TOF-Kamera umfasst.

3. System nach Anspruch 1 oder 2, **dadurch gekennzeichnet, dass** ein einziges Kamerasystem (4) zur Erfassung der Gesamtbreite des Verteilergestänges (3) vorgesehen ist.

4. System nach Anspruch 1 oder 2, **dadurch gekennzeichnet, dass** jeweils ein Kamerasystem (4) zur Erfassung einer halben Gesamtbreite des Verteilergestänges (3) vorgesehen ist.

5. Landwirtschaftliche Maschine zum Ausbringen von Material, wie Düngemittel, Pflanzenschutzmittel oder Saatgut, mit einem Vorratsbehälter (5), einem Verteilergestänge (3), das mit dem Vorratsbehälter (5) verbunden oder verbindbar ist, und einem Regel- oder Steuersystem nach einem der vorhergehenden Ansprüche.

6. Verfahren zum Betreiben einer landwirtschaftlichen Maschine (2), wobei Material, wie Düngemittel, Pflanzenschutzmittel oder Saatgut, aus einem Vorratsbehälter (5) durch ein Verteilergestänge (3) ausgebracht wird, bei dem der Boden- und/oder Pflanzenabstand vom Verteilergestänge (3) mit einem Kamerasystem (4) gemessen wird, das für die Abstandsmessung angepasst ist, wobei die Signale des Kamerasystems (4) zur Höhen- und/oder Neigungsverstellung des Verteilergestänges verwendet werden, um den Boden- und/oder Pflanzenabstand des Verteilergestänges einzustellen.

7. Verwendung einer Sensoreinrichtung zur Höhen- und/oder Neigungsverstellung des Verteilergestänges (3) einer landwirtschaftlichen Maschine zum Ausbringen von Material, wie Düngemittel, Pflanzenschutzmittel oder Saatgut, wobei die Sensoreinrichtung ein Kamerasystem (4), das für die Abstandsmessung angepasst ist, insbesondere mit einer TOF-Kamera, umfasst, um den Boden- und/oder Pflanzenabstand des Verteilergestänges (4) einzustellen.
